# EUROPEAN PATENT SPECIFICATION

(11) **EP 4 262 031 B1**
(45) Date of publication and mention of the grant of the patent: **11.11.2026**
(21) Application number: 21902024.5
(22) Date of filing: 14.07.2021
(51) Int. Cl.: H01R 13/652, H01R 24/38, H01R 13/187, H01R 13/40, H01R 13/655, H01R 25/00, H01R 13/26, H01R 24/78, H01R 13/70

(54) **INSERTION ASSEMBLY AND SOCKET**
EINFÜHRUNGSANORDNUNG UND BUCHSE
ENSEMBLE D'INTRODUCTION ET ALVÉOLE

(30) Priority: 09.12.2020 CN 202011452066
(43) Date of publication of application: 18.10.2023
(73) Proprietor: Gongniu Group Co., Ltd., Ningbo, Zhejiang 315315 (CN)
(72) Inventor: LI, Fuyu, Ningbo, Zhejiang 315315 (CN); ZHANG, Weijun, Ningbo, Zhejiang 315315 (CN); CHAI, Qikai, Ningbo, Zhejiang 315315 (CN)
(74) Representative: Casalonga
(86) International application number: PCT/CN2021/106270
(87) International publication number: WO 2022/121313

(56) References cited:
- EP-A1- 0 825 687
- CN-A- 101 783 469
- CN-A- 101 783 469
- CN-A- 103 904 506
- CN-A- 105 281 129
- CN-A- 112 582 840
- CN-B- 105 281 129
- CN-U- 205 429 314
- CN-U- 205 429 314
- CN-U- 207 572 612
- CN-U- 207 572 612
- CN-U- 210 957 056
- CN-U- 213 692 515
- KR-A- 20120 008 772
- US-A1- 2006 094 307
- US-A1- 2016 226 172

## Description

This application claims priority to Chinese Patent Application No. 202011452066.6, submitted to China National Intellectual Property Administration on December 9, 2020.

### TECHNICAL FIELD

The present disclosure relates to the field of electrical connection device technologies, and in particular, to a plug-in assembly and a socket.

### BACKGROUND

A socket, also known as a power socket or a switch socket, is a common electrical accessory used for electrical connection. The socket may be used for plugging of a plug of one of various electrical devices. The plug has various metal connection wires, and the plug is connected or disconnected with conductive copper components inside the socket through the connection metal wires, thereby implementing connection or disconnection between the socket and the electrical devices.

In order to ensure electrical safety, the socket is usually provided with a grounding component inside. The grounding component is used for grounding. However, during the use of the socket, multiple plugging in and out of the plug may cause a deformation of the grounding component of the socket, thereby resulting in an opening size of the grounding component not complying with a safety distance and related safety requirements (hereinafter referred to as safety specification requirements). As a result, the reliability of the contact between the socket and the plug is reduced, which may lead to a poor grounding of the electrical device and pose a potential safety hazard.

CN207572612U provides a German socket including a cover plate, a grounding piece and a base. The grounding piece is mounted on the base, and the grounding piece includes a left side plate, a right side plate and a bottom plate, the left side plate and the right side plate are symmetrically spaced apart from each other on both ends of the bottom plate. The upper part of the cover plate is respectively provided with two limiting plates corresponding to the left side plate and the right side plate. When the cover plate is mounted on the base, radial relative pulling force is applied to the upper end of left side plate and the upper end of right side plate, respectively, causing deformation of the left and right side panels. The size of the opening part of the grounding piece is safety value at this moment.

CN105281129A provides a German socket grounding strip structure. The German socket grounding strip structure comprises: a base, a grounding piece, a mounting plate and a panel, the grounding piece and the mounting plate are fixed to the base, and the panel extends downwards to form a platform with a predetermined left and right interval. The grounding piece includes a left side plate, a right side plate and a bottom plate, and a spacing between the left side plate and the middle portion of the right side plate is less than the predetermined value. The platform of the panel inserted between the left and right side plates of the grounding piece, and when the spacing between the left side plate of the grounding piece and the middle portion of the right side plate is supported by the platform of the panel to the predetermined value, the size of the opening of the grounding piece is the safety value.

EP0825687A1 provides a two-pole socket. The two-pole socket has a common socket with two plug contacts for the conductor poles and two approximately U-shaped grounding conductor contacts with spring clips for the grounding conductors. The grounding conductor contacts are joined together as one piece and the spring clips are angled out from each U-shaped grounding conductor contact base in a cantilevered manner.

KR20120008772A provides a rotary multi-tap comprising: an upper case having a plurality of insertion holes into which a plug is inserted; a rotary body inserted into a lower portion of the insertion hole; a ground member mounted on a lower portion of the rotary body and connected to a ground terminal of the plug in contact therewith; a ground connection member for connecting the ground members to each other; a support member for supporting the rotary body to be rotated integrally with the plug; a power supply terminal coupled to or separated from a power terminal rod of the plug according to the rotation of the plug; and a lower case coupled to the upper case and having the power supply terminal inserted and mounted therein. A power cable is inserted into the lower case to be soldered to or screwed to each of the ground connection member and the power supply terminal. An electric shock blocking member is further provided between the rotary body and the support member, and a guide protrusion into which the electric shock blocking member is inserted and mounted protrudes from a lower surface of the rotary body.

### SUMMARY

In an aspect, a plug-in assembly is provided, and the plug-in assembly is defined by the appended claim 1.

In another aspect, a socket is provided, and the socket is defined by the appended claim 13.

Further advantageous embodiments of the present disclosure are indicated in the dependent claims.

### BRIEF DESCRIPTION OF THE DRAWINGS

In order to describe technical solutions in the present disclosure more clearly, accompanying drawings to be used in some embodiments of the present disclosure will be introduced briefly below. Obviously, the accompanying drawings to be described below are merely accompanying drawings of some embodiments of the present disclosure, and a person of ordinary skill in the art may obtain other drawings according to these drawings. In addition, the accompanying drawings to be described below may be regarded as schematic diagrams, but are not limitations on an actual size of a product, an actual process of a method and an actual timing of a signal to which the embodiments of the present disclosure relate.
FIG. 1 is a schematic diagram of a partial structure of a socket in the related art;
FIG. 2 is a schematic diagram of a structure of a socket, in accordance with some embodiments;
FIG. 3 is an exploded view of a structure of the socket shown in FIG. 2;
FIG. 4 is an exploded view of a ground clamp and a ground connecting piece in a dashed box J in FIG. 3;
FIG. 5 is a schematic diagram of a structure of a ground clamp, in accordance with some embodiments;
FIG. 6 is a front view of the ground clamp shown in FIG. 5;
FIG. 7 is a top view of the ground clamp shown in FIG. 5;
FIG. 8 is a left view of the ground clamp shown in FIG. 5;
FIG. 9 is a schematic diagram of a partial structure of a cover member, in accordance with some embodiments;
FIG. 10 is a top view of a cover member shown in FIG. 2;
FIG. 11 is a sectional view of the cover member shown in FIG. 10 in a B-B direction;
FIG. 12 is a schematic diagram of a structure of a plug-in assembly, in accordance with some embodiments;
FIG. 13 is a top view of the plug-in assembly shown in FIG. 12; and
FIG. 14 is a sectional view of the plug-in assembly shown in FIG. 13 in an A-A direction.

### DETAILED DESCRIPTION

Technical solutions in some embodiments of the present disclosure will be described clearly and completely with reference to the accompanying drawings below. Obviously, the described embodiments are merely some but not all embodiments of the present disclosure. All other embodiments obtained by a person of ordinary skill in the art based on the embodiments of the present disclosure shall be included in the protection scope of the present disclosure , as long as they fall within the scope of the appended claims.

Unless the context requires otherwise, throughout the description and the claims, the term "comprise" and other forms thereof such as the third-person singular form "comprises" and the present participle form "comprising" are construed as an open and inclusive meaning, i.e., "including, but not limited to". **In** the description of the specification, the terms such as "one embodiment", "some embodiments", "exemplary embodiments", "example", "specific example" or "some examples" are intended to indicate that specific features, structures, materials or characteristics related to the embodiment(s) or example(s) are included in at least one embodiment or example of the present disclosure. Schematic representations of the above terms do not necessarily refer to the same embodiment(s) or example(s). **In** addition, the specific features, structures, materials or characteristics may be included in any one or more embodiments or examples in any suitable manner.

Hereinafter, the terms such as "first" and "second" are used for descriptive purposes only, and are not to be construed as indicating or implying the relative importance or implicitly indicating the number of indicated technical features. Thus, features defined with "first" or "second" may explicitly or implicitly include one or more of the features. **In** the description of the embodiments of the present disclosure, the term "a plurality of" or "the plurality of" means two or more unless otherwise specified.

**In** the description of some embodiments, the expressions "coupled", "connected" and derivatives thereof may be used. For example, the term "connected" may be used in the description of some embodiments to indicate that two or more components are in direct physical or electrical contact with each other. For another example, the term "coupled" may be used in the description of some embodiments to indicate that two or more components are in direct physical or electrical contact. However, the term "coupled" or "communicatively coupled" may also mean that two or more components are not in direct contact with each other, but still cooperate or interact with each other. The embodiments disclosed herein are not necessarily limited to the contents herein.

The phrase "at least one of A, B and C" has a same meaning as the phrase "at least one of A, B or C", and they both include the following combinations of A, B and C: only A, only B, only C, a combination of A and B, a combination of A and C, a combination of B and C, and a combination of A, B and C.

The phrase "A and/or B" includes the following three combinations: only A, only B, and a combination of A and B.

As used herein, the term "if" is optionally construed as "when" or "in a case where" or "in response to determining" or "in response to detecting", depending on the context. Similarly, depending on the context, the phrase "if it is determined that" or "if [a stated condition or event] is detected" is optionally construed as "in a case where it is determined that", "in response to determining that", "in a case where [the stated condition or event] is detected" or "in response to detecting [the stated condition or event]".

The use of the phrase "applicable to" or "configured to" herein means an open and inclusive language, which does not exclude devices that are applicable to or configured to perform additional tasks or steps.

In addition, the use of the phrase "based on" is meant to be open and inclusive, since a process, step, calculation or other action that is "based on" one or more of the stated conditions or values may, in practice, be based on additional conditions or values exceeding those stated.

As used herein, the term such as "about", "substantially" or "approximately" includes a stated value and an average value within an acceptable range of deviation of a particular value. The acceptable range of deviation is determined by a person of ordinary skill in the art in view of measurement in question and errors associated with measurement of a particular quantity (i.e., limitations of a measurement system).

Exemplary embodiments are described herein with reference to sectional views and/or plan views as idealized exemplary drawings. In the accompanying drawings, thicknesses of layers and sizes of regions are enlarged for clarity. Therefore, variations in shapes relative to the accompanying drawings due to, for example, manufacturing technologies and/or tolerances may be envisaged. Therefore, the exemplary embodiments should not be construed as being limited to the shapes of the regions shown herein, but including deviations in the shapes due to, for example, manufacturing. For example, an etched region shown in a rectangular shape generally has a feature of being curved. Therefore, the regions shown in the accompanying drawings are schematic in nature, and their shapes are not intended to show actual shapes of regions in a device, and are not intended to limit the scope of the exemplary embodiments. In the description of the specification, specific features, structures, materials or characteristics may be combined in any suitable manner in any one or more embodiments or examples.

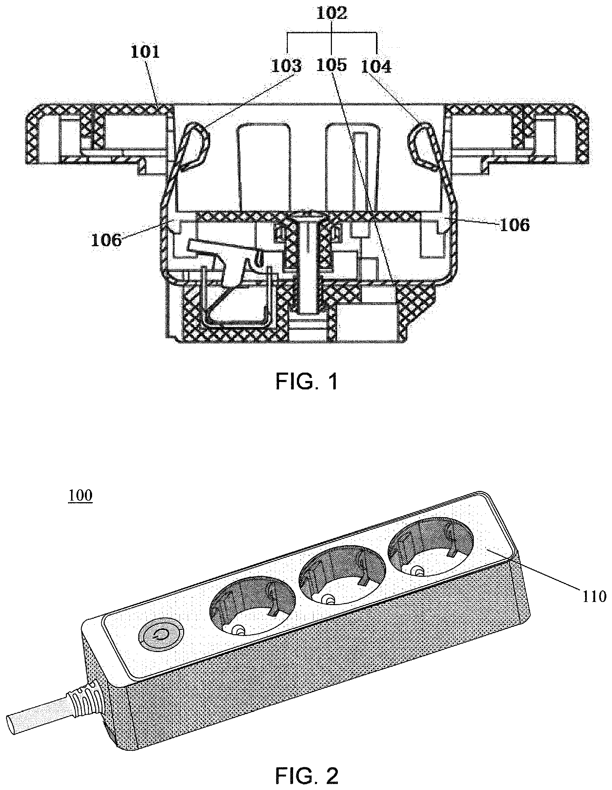

In order to ensure electrical safety, a socket is usually provided inside with components for grounding, such as a grounding piece 102 shown in FIG. 1. The grounding piece 102 has a U-shaped structure as a whole. The grounding piece 102 includes a left side plate 103, a right side plate 104, and a bottom plate 105. The left side plate 103 and the right side plate 104 are symmetrically spaced and disposed at both ends of the bottom plate 105. Two surrounding ends of the left side plate 103 and the right side plate 104 away from the bottom plate 105 form contact portions, and the two contact portions are in contact with a plug adapted thereto. The socket further includes a panel 101, and a main body of the panel 101 extends downwards to form two platforms 106. A distance between side surfaces of the two platforms 106 that are away from each other is a predetermined value. In a case where the grounding piece 102 is in a natural state, a distance between a middle of the left side plate 103 and a middle of the right side plate 104 is less than the above predetermined value. After the grounding piece 102 is assembled with the panel 101, the two platforms 106 are in contact with the middle of the left side plate 103 and the middle of the right side plate 104 respectively, and push the left side plate 103 and the right side plate 104 apart, so that the distance between the middle of the left side plate 103 and the middle of the right side plate 104 reaches the above predetermined value. When designing the grounding piece 102, the distance between the middles of the left side plate 103 and the right side plate 104 of the grounding piece 102 is set to the predetermined value, and a size of an opening of the grounding piece 102 complies with a safety specification value.

It will be noted that the size of the opening of the grounding piece 102 refers to a minimum distance between the two contact portions. The safety specification value refers to a value that complies with a safety distance and related safety requirements. The embodiments of the present disclosure do not limit the value of the safety specification value, which may be determined based on actual cases. For example, the safety specification value may be in a range from 28 mm to 29 mm (i.e., (28.5 ± 0.5) mm). The embodiments of the present disclosure do not limit the value of the predetermined value, as long as in a case where the distance between the middle of the left side plate 103 and the middle of the right side plate 104 is the predetermined value, the size of the opening of the grounding piece 102 complies with the safety specification value.

After assembling the grounding piece 102 with the panel 101, the size of the opening of the grounding piece 102 complies with the safety specification value, thereby ensuring a good contact between the grounding piece 102 and the plug. In addition, even if the bottom plate 105 is twisted and deformed, the size of the opening of the grounding piece 102 may still complies with the safety specification requirements due to the two platforms 106 pushing the left side plate 103 and the right side plate 104 apart, thereby ensuring the reliability of the size of the opening of the grounding piece 102.

However, after multiple plugging in and out of the plug, the contact portions on the side away from the bottom plate 105 are prone to deformation since the two platforms 106 only push the middle of the left side plate 103 and the middle of the right side plate 104 apart. Moreover, when the contact portions are deformed, it may be easy to directly cause the size of the opening of the grounding piece 102 not complying with the safety specification requirements, and further result in a poor contact between the grounding piece 102 and the plug, thereby leading to a decrease in the reliability of grounding of the electrical device and a potential safety hazard.

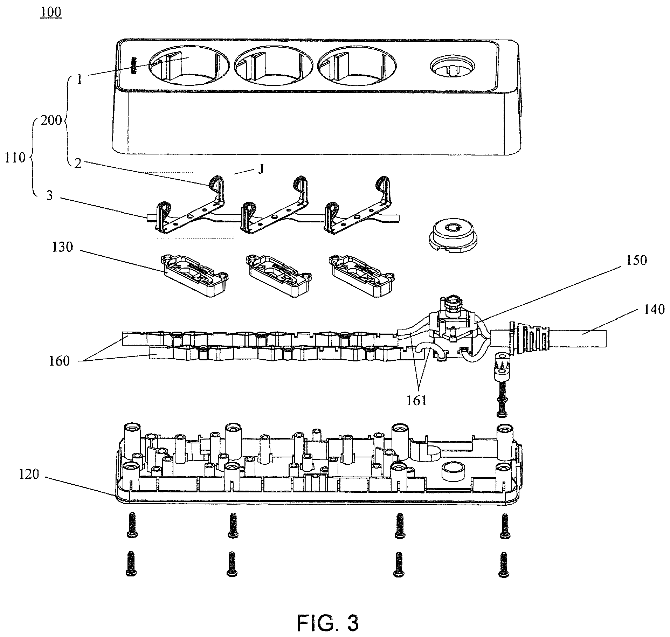

In order to solve the above technical problem, some embodiments of the present disclosure provide a socket 100 as shown in FIGS. 2 and 3. FIG. 3 is an exploded diagram of the structure of the socket 100 shown in FIG. 2. For example, the socket 100 may be a German socket or an Italian socket.

As shown in FIG. 2 and FIG. 3, the socket 100 includes a cover plate 110, a base shell 120, and a protective door assembly 130 located between the cover plate 110 and the base shell 120. The protective door assembly 130 is used to cover socket outlets of the socket 100 in a case where the plug of the electrical device is not plugged into the socket, so as to prevent dust or other contaminants from entering the interior of the socket 100. In a case where the plug of the electrical device is plugged into the socket 100, the protective door assembly 130 moves away to allow the plug to be plugged into the socket 100, thereby implementing a connection between the socket 100 and the electrical device.

As shown in FIG. 3, the socket 100 further includes a power cord 140, a switch 150, and a copper strip connector 160. The copper strip connector 160 is located between the protective door assembly 130 and the base shell 120 and is installed on the protective door assembly 130. The copper strip connector 160 includes a jumper wire 161, and the copper strip connector 160 is connected to an output terminal of the switch 150 through the jumper wire 161. The power cord 140 is connected to an input terminal of the switch 150. The switch 150 may control whether a current is produced between the power cord 140 and the copper strip connector 160, thereby controlling whether the socket 100 is energized. When the switch 150 is turned on, the current flows from the power cord 140 to the copper strip connector 160 through the switch 150. In this case, the socket 100 is energized, so that the electrical device connected to the socket 100 is on. When the switch 150 is turned off, the current cannot flow through the switch 150. In this case, the socket 100 is not energized, so that the electrical device connected to the socket 100 is off.

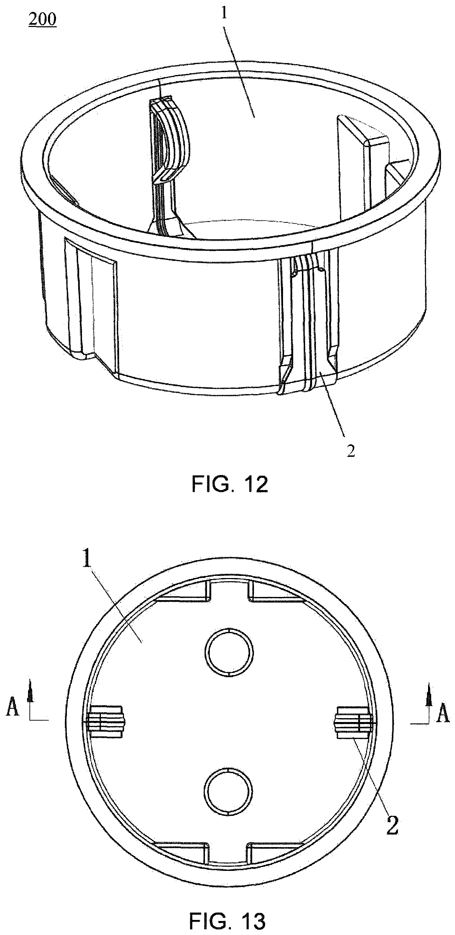

As shown in FIG. 3, the cover plate 110 includes a plurality of plug-in assemblies 200 and a strip-shaped ground connecting piece 3. As shown in FIG. 12, a plug-in assembly 200 includes a cover member 1 and a ground clamp 2, and the cover member 1 and the ground clamp 2 are fixedly connected. Each plug-in assembly 200 creates a plug-in position to allow a plug adapted thereto to be plugged into. As shown in FIG. 3, a plurality of ground clamps 2 are fixedly connected to the ground connecting piece 3. Since the ground connecting piece 3 is used for grounding, the ground of the ground clamps 2 may be implemented by fixedly connecting the ground clamps 2 to the ground connecting piece 3, so as to implement the ground of the plug-in assemblies 200. Further, the plug connected to the plug-in assembly 200 may be grounded, thereby ensuring the electrical safety of the electrical device.

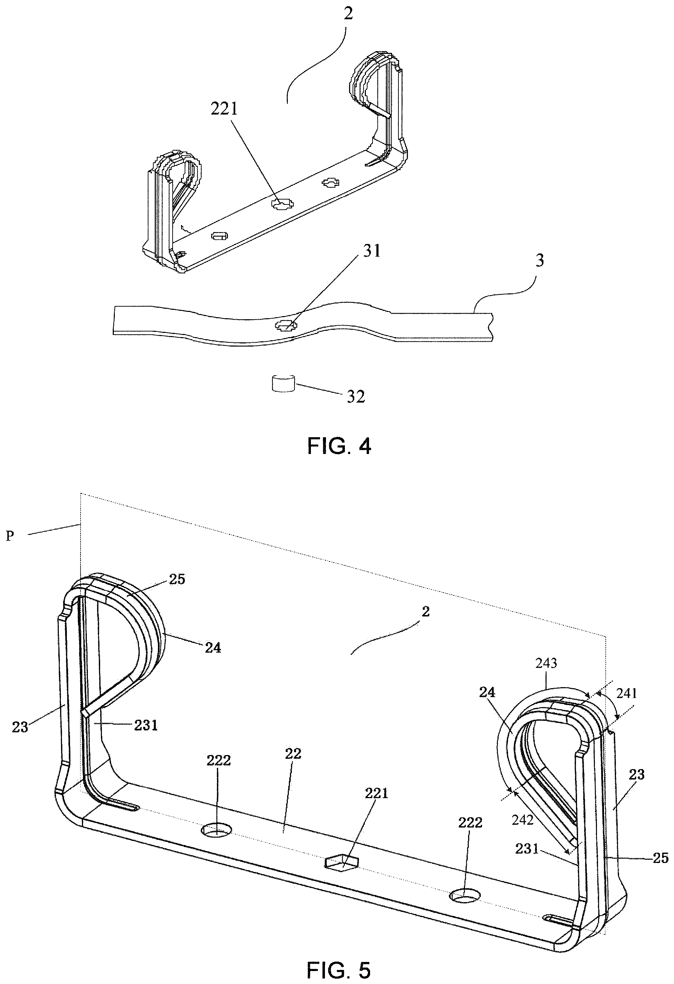

Hereinafter, the fixed connection manner between the ground clamp 2 and the ground connecting piece 3 will be exemplary illustrated. FIG. 4 is an exploded view of a dashed box J in FIG. 3. As shown in FIG. 4, the ground clamp 2 includes a riveting hole 221, and the ground connecting piece 3 includes an installation hole 31 corresponding to the riveting hole 221 and a rivet 32. The rivet 32 passes through the installation hole 31 and the riveting hole 221 in sequence, thereby fixedly connecting the ground clamp 2 to the ground connecting piece 3.

Hereinafter, the structures of the cover member 1 and the ground clamp 2 of the socket 100 will be exemplary illustrated. Firstly, the structure of the ground clamp 2 will be exemplary illustrated.

In some embodiments of the present disclosure, as shown in FIG. 5, the ground clamp 2 is U-shaped as a whole and includes a bottom plate 22 and two clamping plates 23 that are integrally formed. The two clamping plates 23 are symmetrically disposed at two ends of the bottom plate 22 at intervals. In addition, as shown in FIG. 5, the bottom plate 22 and the clamping plates 23 all have flat plate structures, and two side surfaces of the two clamping plates 23 opposite to each other are clamping surfaces 231. As shown in FIG. 12, the two clamping surfaces 231 are used to clamp the cover member 1.

As shown in FIG. 5, the ground clamp 2 further includes contact portions 24 respectively disposed at ends of the clamping plates 23 away from the bottom plate 22. The two contact portions 24 are disposed on sides of the two clamping plates 23 opposite to each other. The contact portion 24 has a curved strip-shaped plate structure. The contact portion 24 and an end of a corresponding clamping plate 23 away from the bottom plate 22 form a closed annular structure. The contact portion 24 and the clamping plate 23 that are shown in FIG. 5 are integrally formed. For example, an end of the contact portion 24 is integrally connected and formed with the end of the clamping plate 23 away from the bottom plate 22, and another end of the contact portion 24 is bent towards the corresponding clamping surface 231 and abuts against the clamping surface 231.

The contact portion 24 is composed of three segments. As shown in FIG. 5, an arc-shaped portion that is connected to the end of the clamping plate 23 is referred to as a first connecting segment 241. A starting point of the first connecting segment 241 is located in a first direction. The first connecting segment 241 extends deviating from the first direction, so that an ending point of the first connecting segment is located in a second direction. The first direction is an extension direction of the clamping plate 23, and the second direction is approximately perpendicular to the first direction. A plate portion that abuts against the clamping surface 231 and is away from the clamping plate 23 is referred to as a second connecting segment 242. A free end of the second connecting segment 242 abuts against the clamping plate 23. A remaining portion between the first connecting segment 241 and the second connecting segment 242 is referred to as a third connecting segment 243. The first connecting segment 241 and the third connecting segment 243 both have curved plate structure, and the second connecting segment 242 has a flat plate structure. The first connecting segment 241 and the third connecting segment 243 may undergo elastic deformation when subjected to an external force, thereby applying a certain elastic force on the cover member 1. The second connecting segment 242 provides good support for the first connecting segment 241 and the third connecting segment 243, thereby improving the deformation resistance capability of the contact portion 24.

It can be seen from the above that the contact portion 24 and the clamping plate 23 are integrally formed and constitutes the annular structure, so that the deformation resistance capability of the contact portion 24 of the ground clamp 2 may be improved.

In the above embodiments, the contact portion 24 and the clamping plate 23 are integrally formed. In some other embodiments, the contact portion 24 and the clamping plate 23 may be separately disposed and fixed together.

In the above embodiments, the contact portion 24 is disposed at the end of the clamping plate 23 away from the bottom plate 22, and the contact portion 24 and the end of the clamping plate 23 away from the bottom plate 22 form the annular structure. In some other embodiments not forming part of the claimed invention, the contact portion 24 may be disposed at another portion of the clamping plate 23, such as the middle of the clamping plate 23. The contact portion 24 and the clamping plate 23 may, in embodiments not forming part of the claimed invention, not form the annular structure. For example, the contact portion 24 may then be a protrusion located on a side of the clamping surface 231 towards an inner cavity of a cylinder body 11 (the cylinder body 11 of the cover member 1, which will be described below) and protruding from the clamping surface 231.

In addition, in order to enhance the structural strength of the ground clamp 2, as shown in FIG. 5, the ground clamp 2 further includes reinforcing ribs 25. The reinforcing ribs 25 are disposed on surfaces of the contact portions 24 and the clamping plates 23 of the ground clamp 2. In addition, surfaces at two ends of the bottom plate 22 are further provided with the reinforcing ribs 25 with predetermined lengths. In some embodiments, the reinforcing ribs 25 disposed on the contact portion 24, the clamping plate 23, and a corresponding side of the bottom plate 22 are integrally connected. The reinforcing ribs 25 on the two clamping plates 23 are disposed on side surfaces of the two clamping plates 23 that are facing away from each other. The reinforcing ribs 25 on the bottom plate 22 are disposed on a surface of the bottom plate 22 away from the clamping plates 23. The reinforcing rib 25 on the contact portion 24 is disposed on the surface of the contact portion 24 away from the corresponding clamping surface 231.

The reinforcing ribs 25 may be integrally formed with the contact portions 24, the clamping plates 23, and the bottom plate 22, for example, through a stamping process. In this way, in a case where the reinforcing rib 25 protrudes from an outer surface of the ground clamp 2 towards an outer side of the ground clamp 2, a portion on an inner surface of the ground clamp 2 corresponding to the reinforcing rib 25 are recessed towards the outer side of the ground clamp 2. The outer surface of the ground clamp 2 includes the surfaces of the two clamping plates 23 that are facing away from each other and remaining outer surfaces, smoothly connected to the surfaces of the two clamping plates 23, of the ground clamp 2. The inner surface of the ground clamp 2 includes the two clamping surfaces 231 and remaining inner surface, smoothly connected to the two clamping surfaces 231, of the ground clamp 2.

In practical applications, the ground clamp 2 electrically cooperates with a plug adapted thereto through the contact portion 24, and make the plug ground, so as to protect the electrical device. When the plug is plugged into the ground clamp 2 facing towards the bottom plate 22, the plug will exert a force on the two contact portions 24 that moves the two contact portions 24 away from each other. However, in some embodiments of the present disclosure, the reinforcing ribs 25 with the integral structure are disposed on the two ends of the bottom plate 22, the clamping plates 23, and the contact portions 24. In this way, when the plug applies the force on the two contact portions 24 that moves the two contact portions 24 away from each other, the strength of the ground clamp 2 may increase due to the reinforcing ribs 25. Therefore, the deformation of the two contact portions 24 in the directions away from each other may be reduced, and the deformation of the two contact portions 24 may be prone to restore after the external force is removed, thereby preventing deformation of the contact portions 24 and further enhancing the reliability of the ground clamp 2. In addition, the reinforcing ribs 25 with the integral structure may further enhance the structural strength of the ground clamp 2.

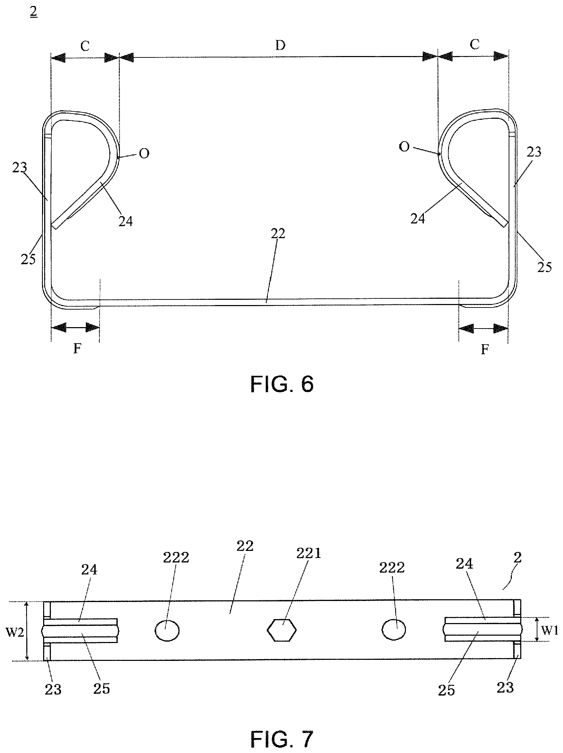

FIG. 6 is a front view of the ground clamp 2 shown in FIG. 5. As shown in FIG. 6, a point on a contact portion 24 furthest away from a corresponding clamping surface 231 forms a contact point O with the plug. A distance between the contact point O and the corresponding clamping surface 231 is defined as C. In a case where the ground clamp 2 is in the natural state, a distance between the contact points O and O of the two contact portions 24 is D. Therefore, in the case where the ground clamp 2 is in the natural state, a distance between the two clamping surfaces 231 is (D + 2C), and the distance D between the two contact points O and O is the size of the opening of the ground clamp 2 in the case where the ground clamp 2 is in the natural state.

Embodiments of the present disclosure do not limit the dimensions of the reinforcing ribs 25 on the outer surface of the bottom plate 22. For example, as shown in FIG. 6, a length F of the reinforcing rib 25 on the outer surface of the bottom plate 22 may be greater than or equal to 0.5C and less than or equal to 2C (i.e., 0.5C ≤ F ≤ 2C). **In** a case where the lengths F of the reinforcing ribs 25 are each less than 0.5C, and the plug applies a relatively large force on the contact portions 24, the reinforcing ribs 25 will not be able to withstand the force, resulting in the deformation of the contact portions 24. **In** a case where the lengths F of the reinforcing ribs 25 are each greater than 2C, the process difficulty may increase, resulting in resource waste and increased costs. Therefore, in a case where the length F of the reinforcing rib 25 is within the above range, it is possible to effectively prevent the deformation of the contact portions 24, and save the costs. For example, the length F of the reinforcing rib 25 may be 0.5C, 0.8C, 1C, 1.2C, 1.5C, 1.8C, or 2C.

As shown in FIG. 5, the bottom plate 22 and the two clamping plates 23 all have plate structures. A plane perpendicular to the bottom plate 22 and perpendicular to the two clamping plates 23 is defined as a reference plane P. **It** can be understood that in FIG. 5, the reference plane P passes through the reinforcing ribs 25. FIG. 7 is a top view of the ground clamp shown in FIG. 5. As shown in FIG. 7, in a direction perpendicular to the above reference plane **P,** a width W1 of the contact portion 24 is smaller than a width W2 of the clamping plate 23.

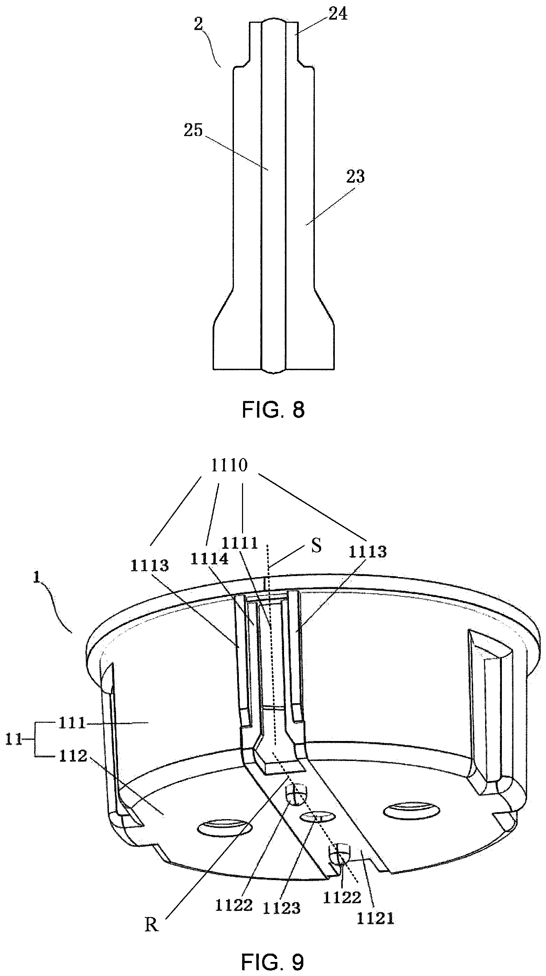

FIG. 8 is a left view of the ground clamp shown in FIG. 5. As shown in FIG. 8, in the direction perpendicular to the above reference plane **P,** the contact portions 24 are respectively located in the middles of the clamping plates 23. In some embodiments, the widths W1 of the contact portions 24 are set to be smaller than the widths W2 of the clamping plates 23, and the contact portions 24 are respectively in the middles of the clamping plates 23. When the ground clamp 2 is fixedly installed on the cover member 1, the contact portions 24 may be located inside the cover member 1, and the clamping plates 23 may clamp the cover member 1 (which will be illustrated again later).

In conclusion, the contact portions 24, the clamping plates 23, and the bottom plate 22 that constitute the ground clamp 2 are provided as the integral structure, and the reinforcing ribs 25 with the integral structure are disposed on the two ends of the bottom plate 22, the clamping plates 23, and the contact portions 24, so that the ground clamp 2 has a stable and reliable structure. In addition, the width of the contact portions 24 is smaller than the width of the clamping plate 23, and the contact potion 24 is located in the middle of the clamping plate 23. Thus, when the ground clamp 2 is fixedly installed on cover member 1, the contact portions 24 are located inside the cover member 1, and the clamping plates 23 clamp the cover member 1.

Hereinafter, the structure of the cover member 1 will be exemplary illustrated.

In some embodiments of the present disclosure, as shown in FIG. 9, the cover member 1 includes a cylinder body 11 for allowing the plug to be plugged therein. The cylinder body 11 includes a side wall 111 and a bottom wall 112. The plug is plugged into the inner cavity of the cylinder body 11 from an end of the cylinder body 11 away from the bottom wall 112.

As shown in FIG. 9, the side wall 111 includes two limiting grooves 1110 located on an outer circumferential surface thereof, and the two limiting grooves 1110 are located opposite to each other along a radial direction R of the cylinder body 11. A long side of each limiting groove 1110 extends along an axial direction S of the cylinder body 11, and the limiting groove 1110 extends along the axial direction of the cylinder body 11 to the bottom wall 112 and extends through a portion of the bottom wall 112. The bottom wall 112 includes an installation groove 1121, and the installation groove 1121 is located on a surface of the bottom wall 112 away from the inner cavity of the cylinder body 11. A long side of the installation groove 1121 extends along the radial direction R of the cylinder body 11, and two ends of the installation groove 1121 are respectively communicated to two limiting grooves 1110.

As shown in FIG. 9, the limiting groove 1110 includes a limiting groove bottom surface 1114 and an avoidance hole 1111 disposed in the limiting groove bottom surface 1114 and extending through the side wall 111. A thickness of a limiting groove bottom wall is less than a thickness of the side wall 111; alternatively, the thickness of the limiting groove bottom wall is the same as the thickness of the side wall 111. A long side of the avoidance hole 1111 extends along the axial direction S of the cylinder body 11, and extends to the bottom wall 112 and extends through a portion of the bottom wall 112.

The presence of the limiting grooves 1110 will reduce the strength of the cylinder body 11. In order to maintain the strength of cylinder body 11, it is necessary to increase the thickness of the side wall 111 of the cylinder body 11. However, the increase in the thickness of the side wall 111 will result in material waste and an increase in weight of the socket 100. In order to prevent the need for increasing the thickness of the side wall 111 due to the presence of limiting grooves 1110, as shown in FIGS. 9 to 11, each limiting groove 1110 further includes two strip-shaped protrusions 1113 disposed opposite to each other. The strip-shaped protrusions 1113 are disposed on an outer surface of the side wall 111 and each protrude from the outer surface of the side wall 111 along the radial direction R of the cylinder body 11. Each strip-shaped protrusion 1113 extends along the axial direction S of the cylinder body 11, so that a length direction of each strip-shaped protrusion 1113 is parallel to the axial direction S of the cylinder body 11. Opposite side surfaces of the two strip-shaped protrusions 1113 corresponding to each limiting groove 1110 may play a role of limiting the clamping plate 23 disposed in the limiting groove 1110.

In order to prevent the two clamping plates 23 (the cooperating relationship between the limiting grooves 1110 and the clamping plates 23 is shown in FIG. 12) disposed in the limiting grooves 1110 from moving along a circumferential direction of the cylinder body 11 or along a tangential direction of the outer circumferential surface of the side wall 111 during torque testing, the opposite side surfaces of the two strip-shaped protrusions 1113 are respectively disposed to be in contact with the side surfaces of the clamping plate 23 in the width direction, thereby implementing the limitation of the clamping plate 23. The opposite side surfaces of the two strip-shaped protrusions 1113 along the circumferential direction of cylinder body 11 constitute a limiting structure that prevents the clamping plate 23 from moving along the circumferential direction of the cylinder body 11 or along the tangential direction of the outer circumferential surface of the side wall 111.

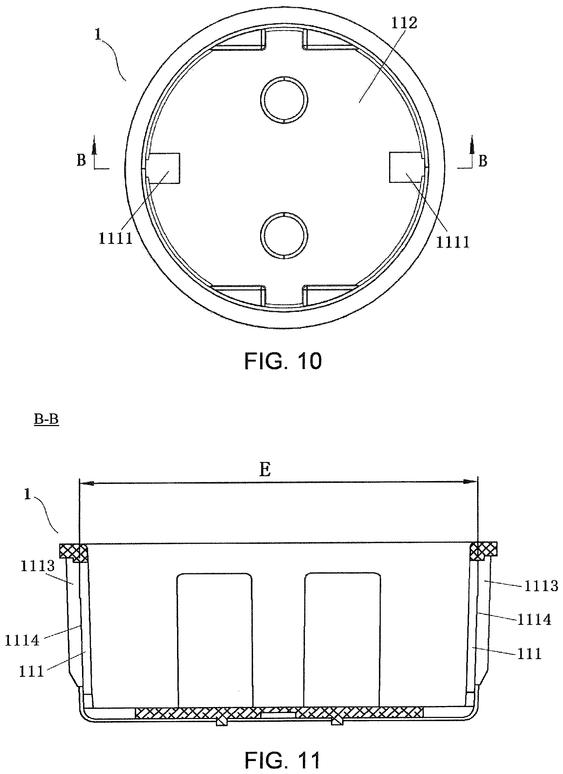

The two limiting grooves 1110 are opposite along the radial direction R of the cylinder body 11. Therefore, as shown in FIG. 11, the limiting groove bottom surfaces 1114 of the two limiting grooves 1110 are also opposite along the radial direction R of the cylinder body 11. A distance between outer surfaces of the two limiting groove bottom surfaces 1114 is a set value E, and E is greater than (D + 2C).

In the above embodiments, in order to prevent the clamping plate 23 from moving along the circumferential direction of the cylinder body 11 or along the tangential direction of the outer circumferential surface of the side wall 111, the limiting groove 1110 is provided on the outer circumferential surface of the side wall 111, the limiting groove 1110 includes two strip-shaped protrusions 1113, and the opposite side surfaces of the two strip-shaped protrusions 1113 along the circumferential direction of cylinder body 11 constitute the limiting structure that prevents the clamping plate 23 from moving along the circumferential direction of the cylinder body 11 or along the tangential direction of the outer circumferential surface of the side wall 111. In some other embodiments, the limiting structure may alternative in other forms. For example, in embodiments not forming part of the claimed invention, the outer circumferential surface of the side wall 111 may not be provided with the limiting grooves 1110 therein. Instead, two protrusions may be provided corresponding to each clamping plate 23 at intervals along the circumferential direction of the cylinder body. The clamping plates 23 extends between the two corresponding protrusions, and the two protrusions may be respectively in contact with the two side surfaces of the clamping plate 23, which will also implement the limitation of the clamping plate 23. In some other embodiments, also not forming part of the claimed invention, the limiting structure may not be provided, a portion of the contact portion 24 that extends into the inner cavity of the cylinder body 11 is used to limit the movement of the clamping plate along the circumferential direction of the cylinder body 11 or along the tangential direction of the outer circumferential surface of the side wall 111.

In the above embodiments, the opposite surfaces of the two strip-shaped protrusions 1113 constitute groove walls of the limiting groove. In some other embodiments, the strip-shaped protrusions 1113 may not be provided. In order to ensure that the limiting grooves 1110 may effectively prevent the movement of the clamping plates 23, the thickness of the side wall 111 may increase, and a groove depth of the limiting groove 1110 may increase accordingly.

In the above embodiments, the avoidance holes 1111 each extend along the axial direction S of the cylinder body 11 to the bottom wall 112 and extend through the portion of the bottom wall 112. In some other embodiments, the avoidance holes 1111 may not extend to the bottom wall 112. Instead, the avoidance holes 1111 exist only at positions where the contact portions 24 are located when the ground clamp 2 is clamped in place, as long as the contact portions 24 can extend into the inner cavity of the cylinder body 11.

Hereinafter, the process of assembling the ground clamp 2 and the cover member 1 will be exemplary illustrated. As shown in FIGS. 5, 9, 10, and 11, the ground clamp 2 moves upward from the bottom wall 112 of the cylinder body 11 until the ground clamp 2 is clamped onto the side wall 111. The two clamping plates 23 of the ground clamp 2 each extend into a gap between the two strip-shaped protrusions 1113, and the clamping surfaces 231 of the two clamping plates 23 are respectively in contact with the limiting groove bottom surfaces 1114 of the two limiting grooves 1110. That is, the two clamping plates 23 of the ground clamp 2 are clamped onto the two limiting groove bottom surfaces 1114, and the limiting groove bottom surfaces 1114 constitute cooperating surfaces on the side wall 111 for cooperating to the clamping surfaces 231. The clamping plates 23 constitute a clamping portion of the ground clamp 2 for clamping the side wall 111.

It will be noted that in the above embodiments, the clamping plates 23 constitute the clamping portion of the ground clamp 2 for clamping the side wall 111. In some other embodiments, the clamping portion may be only a portion of the clamping plates 23. That is, when in use, only side surfaces of this portion facing the side wall 111 constitute the clamping surfaces and are attached to the side wall 111, as long as the contact portions 24 are provided on this portion simultaneously.

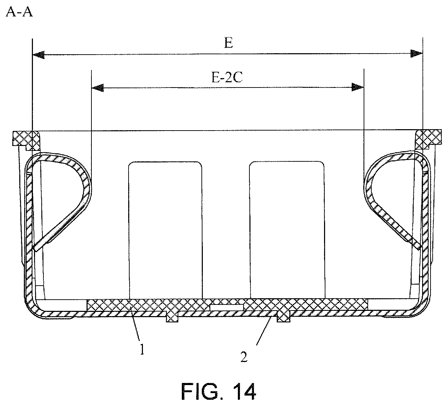

FIG. 14 is a sectional view of FIG. 13 in an A-A direction. As shown in FIGS. 5, 9, and 14, the bottom plate 22 of the ground clamp 2 extends into the installation groove 1121 and attaches to a groove bottom of installation groove 1121. As shown in FIG. 9, in order to ensure that the bottom plate 22 can be attached to the groove bottom of the installation groove 1121, the installation groove 1121 includes a blind hole 1123 disposed in the groove bottom. The blind hole 1123 is used to accommodate a protruding portion of the rivet 32 passing through the riveting hole 221 in FIG. 4.

As shown in FIG. 9, the installation groove 1121 further includes two positioning protrusions 1122 located on a side of the bottom wall 112 away from the inner cavity of the cylinder body 11. As shown in FIG. 5, the bottom plate 22 of the ground clamp 2 includes two through holes 222. The two through holes 222 of the ground clamp 2 allow the two positioning protrusions 1122 of the installation groove 1121 to pass through. Therefore, during assembling the ground clamp 2 and the cover member 1, the cooperation between the through holes 222 and the positioning protrusions 1122 may play a positioning role, so as to improve the reliability of the installation between the ground clamp 2 and the cover member 1. In addition, the positioning protrusions 1122 are respectively fixed in the through holes 222, thereby preventing the ground clamp 2 from moving relative to the cover member 1 along the circumferential direction of the cylinder body 11. During assembling the ground clamp 2 into the cylinder body 11, the contact portion 24 move along the avoidance hole 1111, and extend into the inner cavity of the cylinder body 11 through the avoidance hole 1111 when the ground clamp 2 is clamped in place.

As shown in FIG. 14, when the ground clamp 2 is clamped onto the cylinder body 11, the distance E between the outer surfaces of the two limiting groove bottom surfaces 1114 is greater than (D + 2C). Therefore, after the two clamping plates 23 are pushed apart by the side wall 111, the distance between the two clamping surfaces 231 changes from (D + 2C) to E. When designing the sizes of the ground clamp 2 and the cover member 1, the distance (E - 2C) between the two contact points O and O complies with the safety specification value in a case of the distance between the two clamping surfaces 231 is E. That is, when the ground clamp 2 is clamped onto the cylinder body 11, the two clamping plates 23 are pushed apart by the cover member 1, so that the size of the opening of the ground clamp 2 (i.e., the distance between the two contact points O and O) complies with the safety specification requirements. In this way, there may be good contact between the plug and the ground clamp 2, and a comfortable plug-and-unplug experience.

For the ground clamp 2 provided in some embodiments of the present disclosure, even though the bottom plate 22 undergoes deformation, since the two clamping plates 23 connected to the bottom plate 22 are pushed apart by the cover member 1, the size of the opening of the ground clamp 2 may still comply with the safety specification requirements, thereby ensuring the reliability of the size of the opening of the ground clamp 2. Moreover, the contact portions 24 are provided thereon with the second connecting segments 242 with the flat plate structures, so as to provide good support for the first connecting segments 241 and the third connecting segments 243, and make the contact portions 24 not be prone to deformation, thereby ensuring that the size of the opening of the ground clamp 2 complies with the safety specification requirements.

In addition, compared to the grounding piece 102 shown in FIG. 1, the clamping plates 23 of the ground clamp 2 provided in some embodiments of the present disclosure have flat plate structures, and are clamped as a whole onto the side wall 111 of the cylinder body 11. The contact portions 24 are integrally formed with the two clamping plates 23, respectively. Therefore, even if the contact portions 24 undergo deformation, the deformation will not cause the size of the opening of ground clamp 2 not to meet the safety specification requirements due to significant deviation in the size of the opening of the ground clamp 2.

It will be noted that the above safety specification value may be determined based on actual requirements. The safety specification value may be a commonly used value in the range from 28 mm to 29 mm (i.e., (28.5 ± 0.5) mm), or any other specific value as required.

In the above embodiments, the bottom wall 112 includes the installation groove 1121 located away from the inner cavity of the cylinder body 11. When the ground clamp 2 is clamped in place, the bottom plate 22 is located in the installation groove 1121. In some other embodiments, the bottom wall 112 may not be provided with the installation groove 1121. When the ground clamp 2 is clamped in place, the bottom plate 22 may be attached to the surface of the bottom wall 112 away from the inner cavity of the cylinder body 11. Of course, when the ground clamp 2 is clamped in place, the bottom plate 22 may alternatively not be attached to the bottom wall 112.

In the above embodiments, the groove bottom of the installation groove 1121 is provided with the positioning protrusions 1122 thereon. The positioning protrusions 1122 cooperate with the through holes 222 of the ground clamp 2, thereby preventing the ground clamp 2 from moving along the circumferential direction of the cylinder body 11 relative to the cover member 1. In other embodiments, the groove bottom of the installation groove 1121 may not be provided with positioning protrusions 1122.

The foregoing descriptions are merely specific implementation of the present disclosure, but the protection scope of the present disclosure is not limited thereto, and changes or replacements that any person skilled in the art could readily conceive of within the technical scope disclosed by the present disclosure shall be included within the protection scope of the present disclosure, as defined by the claims.

## Claims

1. A plug-in assembly (200), comprising:
a cover member (1) including a cylinder body (11) configured to allow a plug to be plugged therein; the cylinder body (11) including a side wall (111) and a bottom wall (112), and the side wall (111) including two avoidance holes (1111) disposed along a radial direction of the cylinder body (11); and
a ground clamp (2), including:
a bottom plate (22) located on a side of the bottom wall (112) away from an inner cavity of the cylinder body (11);
two clamping plates (23) disposed opposite to each other along the radial direction of the cylinder body (11), and located on an outer surface of the side wall (111); the two clamping plates (23) being configured to clamp the side wall (111); side surfaces of the two clamping plates (23) opposite to each other being clamping surfaces (231); and
contact portions (24) each located on a side of a clamping plate (23) away from the bottom plate (22); each contact portion (24) and an end of a corresponding clamping plate (23) away from the bottom plate (22) constituting a closed annular structure; and each contact portion (24) passing through an avoidance hole (1111) to be located in the inner cavity of the cylinder body (11); wherein
an outer circumferential surface of the side wall (111) is provided thereon with a limiting structure configured to prevent the clamping plates (23) from moving along a circumferential direction of the cylinder body (11);
wherein the limiting structure comprises two limiting grooves (1110) disposed opposite to each other along the radial direction of the cylinder body (11), each limiting groove (1110) comprising a limiting groove bottom surface (1114);
a distance between the two clamping surfaces (231) is equal to a distance between outer surfaces of two limiting groove bottom surfaces (1114), so that the cylinder body (11) pushes the two clamping plates (23) apart; and
after the cylinder body (11) pushes the two clamping plates (23) apart, a minimum distance between the two contact portions (24) is a safety specification value.

2. The plug-in assembly (200) according to claim 1, **characterized in that**
the contact portion (24) includes a first connecting segment (241), a second connecting segment (242), and a third connecting segment (243) located between the first connecting segment (241) and the second connecting segment (242);
the first connecting segment (241) includes an arc-shaped portion connected to the end of the corresponding clamping plate (23); a starting direction of the first connecting segment (241) is located in a first direction, the first connecting segment (241) extends deviating from the first direction, and an ending direction of the first connecting segment (241) is located in a second direction; the first direction is an extension direction of the clamping plate (23), and the second direction is perpendicular to the first direction; and
a free end of the second connecting segment (242) abuts against the corresponding clamping plate (23).

3. The plug-in assembly (200) according to claim 1, **characterized in that** the bottom plate (22), the clamping plates (23), and the contact portions (24) have an integral structure.

4. The plug-in assembly (200) according to claim 1, **characterized in that** the ground clamp (2) further includes reinforcing ribs (25); and the reinforcing ribs (25) are located on outer surfaces of the contact portions (24), the clamping plates (23), and both ends of the bottom plate (22).

5. The plug-in assembly (200) according to claim 4, **characterized in that** the reinforcing ribs (25), the contact portions (24), the clamping plates (23), and the bottom plate (22) have an integral structure.

6. The plug-in assembly (200) according to claim 1, **characterized in that** an orthogonal projection of the contact portion (24) on the clamping plate (23) is located in a middle of the clamping plate (23).

7. The plug-in assembly (200) according to claim 1, **characterized in that** a width of an orthogonal projection of the contact portion (24) on the bottom plate (22) is smaller than a width of an orthogonal projection of the clamping plate (23) on the bottom plate (22).

8. The plug-in assembly (200) according to claim 1, **characterized in that** an orthogonal projection of the contact portion (24) on the clamping plate (23) is located in a middle of the clamping plate (23); and
a width of an orthogonal projection of the contact portion (24) on the bottom plate (22) is smaller than a width of an orthogonal projection of the clamping plate (23) on the bottom plate (22).

9. The plug-in assembly (200) according to claim 1, **characterized in that** each avoidance hole (1111) is disposed in a respective limiting groove bottom surface (1114);
the avoidance hole (1111) extends along an axial direction of the cylinder body (11) to the bottom wall (112) and extends through a portion of the bottom wall (112);
a clamping surface (231) of the clamping plate (23) is attached to the limiting groove bottom surface (1114); and
two side surfaces of the avoidance hole (1111) opposite to each other along the circumferential direction of the cylinder body (11) are configured to limit a contact portion (24) to move along the circumferential direction of the cylinder body (11).

10. The plug-in assembly (200) according to claim 9, **characterized in that** the limiting groove (1110) further includes two strip-shaped protrusions (1113) disposed opposite to each other, and protruding from the outer surface of the side wall (111) along the radial direction of the cylinder body (11);
the strip-shaped protrusions (1113) extend along the axial direction of the cylinder body (11), and a length direction of the strip-shaped protrusions (1113) is parallel to the axial direction of the cylinder body (11); and
opposite side surfaces of the two strip-shaped protrusions (1113) are configured to limit the clamping plate (23) to move along the circumferential direction of the cylinder body (11).

11. The plug-in assembly (200) according to claim 9, **characterized in that** the bottom wall (112) includes an installation groove (1121) on a side away from the inner cavity of the cylinder body (11); the installation groove (1121) extends along the radial direction of the cylinder body (11), and two ends of the installation groove (1121) are respectively communicated the limiting grooves (1110); and the bottom plate (22) is located in the installation groove (1121).

12. The plug-in assembly according to claim 11, **characterized in that** the installation groove (1121) includes a positioning protrusion (1122); the bottom plate (22) of the ground clamp (2) includes a through hole (222) for the positioning protrusion (1122) to pass through; and the positioning protrusion (1121) is configured to cooperate with the through hole (222) to prevent the ground clamp (2) from moving along the circumferential direction of the cylinder body (11) relative to the cover member (1).

13. A socket (100), **characterized in that** the socket (100) comprises a cover plate (110); the cover plate (110) includes:
at least one plug-in assembly (200) according to any one of the claims 1 to 12; and
a ground connecting piece (3), the at least one plug-in assembly (200) being fixedly connected with the ground connecting piece (3).

14. The socket (100) according to claim 13, **characterized in that**
the ground clamp (2) includes a riveting hole (221), and the ground connecting piece (3) includes an installation hole (31); and the ground clamp (2) is fixedly connected with the ground connecting piece (3) by a rivet (32) passing through the installation hole (31) and the riveting hole (221) in sequence;
or,
the ground clamp (2) includes the riveting hole (221), and the ground connecting piece (3) includes the installation hole (31); and the ground clamp (2) is fixedly connected with the ground connecting piece (3) by the rivet (32) passing through the installation hole (31) and the riveting hole (221) in sequence; the bottom wall (112) includes an installation groove (1121) on a side away from the inner cavity of the cylinder body (11); the installation groove (1121) extends along the radial direction of the cylinder body (11), and the installation groove (1121) includes a blind hole (1123) configured to accommodate a protruding portion of the rivet (32) passing through the riveting hole (221).

15. The socket (100) according to claim 13 **characterized in that** the socket (100) further comprises a protective door assembly (130), a power cord (140), a switch (150), a copper strip connector (160), and a base shell (120), wherein
the protective door assembly (130) is located between the cover plate (110) and the base shell (120); and the protective door assembly (130) is configured to cover socket outlets of the socket (100) in a case where a plug of an electrical device is not plugged into the socket (100), and uncover the socket outlets of the socket (100) in a case where the plug of the electrical device is plugged into the socket (100);
the copper strip connector (160) is located between the protective door assembly (130) and the base shell (120), installed on the protective door assembly (130), and connected to an output terminal of the switch (150) through a jumper wire;
the power cord (140) is connected to an input terminal of the switch (150); and
the switch (150) is configured to control whether a current is produced between the power cord (140) and the copper strip connector (160), and further control whether the socket (100) is energized.

## Patentansprüche

1. Steckverbinderbaugruppe (200), umfassend:
ein Abdeckelement (1), das einen Zylinderkörper (11) beinhaltet, der so konfiguriert ist, dass ein Stecker darin eingesteckt werden kann; wobei der Zylinderkörper (11) eine Seitenwand (111) und eine Bodenwand (112) beinhaltet und die Seitenwand (111) zwei Ausweichlöcher (1111) beinhaltet, die entlang einer Radialrichtung des Zylinderkörpers (11) angeordnet sind; und
eine Erdungsklemme (2), die beinhaltet:
eine Bodenplatte (22), die sich an der von einem inneren Hohlraum des Zylinderkörpers (11) abgewandten Seite der Bodenwand (112) befindet;
zwei Klemmplatten (23), die entlang der Radialrichtung des Zylinderkörpers (11) einander gegenüberliegend angeordnet sind und sich an einer Außenfläche der Seitenwand (111) befinden; wobei die zwei Klemmplatten (23) so konfiguriert sind, dass sie die Seitenwand (111) festklemmen; wobei die einander gegenüberliegenden Seitenflächen der zwei Klemmplatten (23) Klemmflächen (231) sind; und
Kontaktabschnitte (24), die sich jeweils an einer von der Bodenplatte (22) abgewandten Seite einer Klemmplatte (23) befinden; wobei jeder Kontaktabschnitt (24) und ein von der Bodenplatte (22) abgewandtes Ende einer entsprechenden Klemmplatte (23) eine geschlossene ringförmige Struktur bilden; und wobei jeder Kontaktabschnitt (24) durch ein Ausweichloch (1111) verläuft, um sich im inneren Hohlraum des Zylinderkörpers (11) zu befinden; wobei
eine äußere Umfangsfläche der Seitenwand (111) mit einer Begrenzungsstruktur bereitgestellt ist, die so konfiguriert ist, dass sie eine Bewegung der Klemmplatten (23) entlang einer Umfangsrichtung des Zylinderkörpers (11) verhindert;
wobei die Begrenzungsstruktur zwei Begrenzungsnuten (1110) umfasst, die entlang der Radialrichtung des Zylinderkörpers (11) einander gegenüberliegend angeordnet sind, wobei jede Begrenzungsnut (1110) eine Begrenzungsnut-Bodenfläche (1114) umfasst;
einen Abstand zwischen den zwei Klemmflächen (231), der dem Abstand zwischen den Außenflächen der zwei Begrenzungsnut-Bodenflächen (1114) entspricht, sodass der Zylinderkörper (11) die zwei Klemmplatten (23) auseinander drückt; und
nachdem der Zylinderkörper (11) die zwei Klemmplatten (23) auseinandergedrückt hat, der Mindestabstand zwischen den zwei Kontaktabschnitten (24) ein Sicherheitsanforderungswert ist.

2. Steckverbinderbaugruppe (200) nach Anspruch 1, **dadurch gekennzeichnet, dass**
der Kontaktabschnitt (24) ein erstes Verbindungssegment (241), ein zweites Verbindungssegment (242) und ein drittes Verbindungssegment (243) beinhaltet, das sich zwischen dem ersten Verbindungssegment (241) und dem zweiten Verbindungssegment (242) befindet;
das erste Verbindungssegment (241) einen bogenförmigen Abschnitt beinhaltet, der mit dem Ende der entsprechenden Klemmplatte (23) verbunden ist; sich eine Ausgangsrichtung des ersten Verbindungssegments (241) in einer ersten Richtung befindet, sich das erste Verbindungssegment (241) von der ersten Richtung abweichend erstreckt und sich eine Endrichtung des ersten Verbindungssegments (241) in einer zweiten Richtung befindet; die erste Richtung eine Ausdehnungsrichtung der Klemmplatte (23) ist, und die zweite Richtung senkrecht zur ersten Richtung verläuft; und
ein freies Ende des zweiten Verbindungssegments (242) an der entsprechenden Klemmplatte (23) anliegt.

3. Steckverbinderbaugruppe (200) nach Anspruch 1, **dadurch gekennzeichnet, dass** die Bodenplatte (22), die Klemmplatten (23) und die Kontaktabschnitte (24) eine integrale Struktur aufweisen.

4. Steckverbinderbaugruppe (200) nach Anspruch 1, **dadurch gekennzeichnet, dass** die Erdungsklemme (2) ferner Verstärkungsrippen (25) beinhaltet; und sich die Verstärkungsrippen (25) an den Außenflächen der Kontaktabschnitte (24), der Klemmplatten (23) und an beiden Enden der Bodenplatte (22) befinden.

5. Steckverbinderbaugruppe (200) nach Anspruch 4, **dadurch gekennzeichnet, dass** die Verstärkungsrippen (25), die Kontaktabschnitte (24), die Klemmplatten (23) und die Bodenplatte (22) eine integrale Struktur aufweisen.

6. Steckverbinderbaugruppe (200) nach Anspruch 1, **dadurch gekennzeichnet, dass** sich eine orthogonale Projektion des Kontaktabschnitts (24) auf die Klemmplatte (23) in der Mitte der Klemmplatte (23) befindet.

7. Steckverbinderbaugruppe (200) nach Anspruch 1, **dadurch gekennzeichnet, dass** die Breite einer orthogonalen Projektion des Kontaktabschnitts (24) auf die Bodenplatte (22) kleiner als die Breite einer orthogonalen Projektion der Klemmplatte (23) auf die Bodenplatte (22) ist.

8. Steckverbinderbaugruppe (200) nach Anspruch 1, **dadurch gekennzeichnet, dass** sich eine orthogonale Projektion des Kontaktabschnitts (24) auf die Klemmplatte (23) in der Mitte der Klemmplatte (23) befindet; und
die Breite der orthogonalen Projektion des Kontaktabschnitts (24) auf die Bodenplatte (22) kleiner als die Breite der orthogonalen Projektion der Klemmplatte (23) auf die Bodenplatte (22) ist.

9. Steckverbinderbaugruppe (200) nach Anspruch 1, **dadurch gekennzeichnet, dass** jedes Ausweichloch (1111) in einer jeweiligen Begrenzungsnut-Bodenfläche (1114) angeordnet ist;
das Ausweichloch (1111) sich entlang einer Axialrichtung des Zylinderkörpers (11) bis zur Bodenwand (112) erstreckt und sich durch einen Abschnitt der Bodenwand (112) erstreckt;
eine Klemmfläche (231) der Klemmplatte (23) an der Begrenzungsnut-Bodenfläche (1114) befestigt ist; und
zwei Seitenflächen des Ausweichlochs (1111), die entlang der Umfangsrichtung des Zylinderkörpers (11) einander gegenüberliegen, so konfiguriert sind, dass sie das Bewegen eines Kontaktabschnitts (24) entlang der Umfangsrichtung des Zylinderkörpers (11) begrenzen.

10. Steckverbinderbaugruppe (200) nach Anspruch 9, **dadurch gekennzeichnet, dass** die Begrenzungsnut (1110) ferner zwei streifenförmige Vorsprünge (1113) beinhaltet, die einander gegenüberliegend angeordnet sind und von der Außenfläche der Seitenwand (111) entlang der Radialrichtung des Zylinderkörpers (11) vorstehen;
die streifenförmigen Vorsprünge (1113) sich entlang der Axialrichtung des Zylinderkörpers (11) erstrecken, und eine Längsrichtung der streifenförmigen Vorsprünge (1113) zur Axialrichtung des Zylinderkörpers (11) parallel verläuft; und
die gegenüberliegenden Seitenflächen der zwei streifenförmigen Vorsprünge (1113) so konfiguriert sind, dass sie das Bewegen der Klemmplatte (23) entlang der Umfangsrichtung des Zylinderkörpers (11) begrenzen.

11. Steckverbinderbaugruppe (200) nach Anspruch 9, **dadurch gekennzeichnet, dass** die Bodenwand (112) auf einer vom inneren Hohlraum des Zylinderkörpers (11) abgewandten Seite eine Installationsnut (1121) beinhaltet; sich die Installationsnut (1121) entlang der Radialrichtung des Zylinderkörpers (11) erstreckt und zwei Enden der Installationsnut (1121) jeweils mit den Begrenzungsnuten (1110) in Verbindung stehen; und sich die Bodenplatte (22) in der Installationsnut (1121) befindet.

12. Steckverbinderbaugruppe nach Anspruch 11, **dadurch gekennzeichnet, dass** die Installationsnut (1121) einen Positionierungsvorsprung (1122) beinhaltet; die Bodenplatte (22) der Erdungsklemme (2) ein Durchgangsloch (222) beinhaltet, durch das der Positionierungsvorsprung (1122) hindurchgeführt werden kann; und der Positionierungsvorsprung (1121) so konfiguriert ist, dass er mit dem Durchgangsloch (222) zusammenwirkt, um zu verhindern, dass sich die Erdungsklemme (2) entlang der Umfangsrichtung des Zylinderkörpers (11) relativ zum Abdeckelement (1) bewegt.

13. Buchse (100), **dadurch gekennzeichnet, dass** die Buchse (100) eine Abdeckplatte (110) umfasst; wobei die Abdeckplatte (110) beinhaltet:
mindestens eine Steckverbinderbaugruppe (200) nach einem der Ansprüche 1 bis 12; und
ein Erdungsverbindungsstück (3), wobei die mindestens eine Steckverbinderbaugruppe (200) mit dem Erdungsverbindungsstück (3) fest verbunden ist.

14. Buchse (100) nach Anspruch 13, **dadurch gekennzeichnet, dass**
die Erdungsklemme (2) ein Nietloch (221) beinhaltet, und das Erdungsverbindungsstück (3) ein Installationsloch (31) beinhaltet; und die Erdungsklemme (2) mit dem Erdungsverbindungsstück (3) fest verbunden ist, und zwar mittels eines Niets (32), der nacheinander durch das Installationsloch (31) und das Nietloch (221) geführt wird;
oder,
die Erdungsklemme (2) das Nietloch (221) beinhaltet, und das Erdungsverbindungsstück (3) das Installationsloch (31) beinhaltet; und die Erdungsklemme (2) mit dem Erdungsverbindungsstück (3) fest verbunden ist, indem der Niet (32) nacheinander durch das Installationsloch (31) und das Nietloch (221) geführt wird; die Bodenwand (112) auf einer von dem inneren Hohlraum des Zylinderkörpers (11) abgewandten Seite ein Installationsloch (1121) beinhaltet; sich das Installationsloch (1121) entlang der Radialrichtung des Zylinderkörpers (11) erstreckt, und die Installationsnut (1121) ein Sackloch (1123) beinhaltet, das so konfiguriert ist, dass es einen vorstehenden Abschnitt des durch das Nietloch (221) hindurchgehenden Niets (32) aufnimmt.

15. Buchse (100) nach Anspruch 13, **dadurch gekennzeichnet, dass** die Buchse (100) ferner eine Schutzklappenbaugruppe (130), ein Netzkabel (140), einen Schalter (150), einen Kupferbandverbinder (160) und ein Basisgehäuse (120) umfasst, wobei
die Schutzklappenbaugruppe (130) sich zwischen der Abdeckplatte (110) und dem Basisgehäuse (120) befindet;
und die Schutzklappenbaugruppe (130) so konfiguriert ist, dass sie die Steckdosen der Buchse (100) abdeckt, in einem Fall, in dem kein Stecker einer elektrischen Vorrichtung in die Steckdose (100) eingesteckt ist, und die Steckdosen der Buchse (100) freizulegen, in einem Fall, in dem der Stecker der elektrischen Vorrichtung in die Buchse (100) eingesteckt ist;
der Kupferbandverbinder (160), der sich zwischen der Schutzklappenbaugruppe (130) und dem Basisgehäuse (120) befindet, an der Schutzklappenbaugruppe (130) angebracht ist und über eine Überbrückungsleitung mit einem Ausgangsanschluss des Schalters (150) verbunden ist;
das Netzkabel (140) mit einem Eingangsanschluss des Schalters (150) verbunden ist; und
der Schalter (150) so konfiguriert ist, dass er steuert, ob zwischen dem Netzkabel (140) und dem Kupferbandverbinder (160) ein Strom erzeugt wird, und darüber hinaus steuert, ob die Buchse (100) unter Spannung steht.

## Revendications

1. Ensemble enfichable (200), comprenant :
un organe de recouvrement (1) comportant un corps de cylindre (11) configuré pour permettre l'insertion d'une fiche dans celui-ci ; le corps de cylindre (11) comportant une paroi latérale (111) et une paroi inférieure (112), et la paroi latérale (111) comportant deux trous d'évitement (1111) disposés le long d'une direction radiale du corps de cylindre (11) ; et
un collier de mise à la terre (2), comportant :
une plaque inférieure (22) située sur un côté de la paroi inférieure (112) éloigné d'une cavité interne du corps de cylindre (11) ;
deux plaques de serrage (23) disposées en vis-à-vis le long de la direction radiale du corps de cylindre (11), et situées sur une surface externe de la paroi latérale (111) ;
les deux plaques de serrage (23) étant configurées pour serrer la paroi latérale (111) ; les surfaces latérales des deux plaques de serrage (23) en vis-à-vis étant des surfaces de serrage (231) ; et
des parties de contact (24) situées chacune sur un côté d'une plaque de serrage (23) éloigné de la plaque inférieure (22) ; chaque partie de contact (24) et une extrémité d'une plaque de serrage (23) correspondante éloignée de la plaque inférieure (22) constituant une structure annulaire fermée ; et chaque partie de contact (24) traversant un trou d'évitement (1111) devant être situé dans la cavité interne du corps de cylindre (11) ;
dans lequel
une surface circonférentielle externe de la paroi latérale (111) est dotée sur celle-ci d'une structure de limitation configurée pour empêcher les plaques de serrage (23) de se déplacer le long d'une direction circonférentielle du corps de cylindre (11) ;
dans lequel la structure de limitation comprend deux rainures de limitation (1110) disposées en vis-à-vis le long de la direction radiale du corps de cylindre (11), chaque rainure de limitation (1110) comprenant une surface inférieure de rainure de limitation (1114) ;
une distance entre les deux surfaces de serrage (231) est égale à une distance entre les surfaces externes de deux surfaces inférieures de rainure de limitation (1114), de sorte que le corps de cylindre (11) écarte les deux plaques de serrage (23) ; et
après que le corps de cylindre (11) a écarté les deux plaques de serrage (23), une distance minimale entre les deux parties de contact (24) est une valeur de spécification de sécurité.

2. Ensemble enfichable (200) selon la revendication 1, **caractérisé en ce que**
la partie de contact (24) comporte un premier segment de connexion (241), un deuxième segment de connexion (242) et un troisième segment de connexion (243) situé entre le premier segment de connexion (241) et le deuxième segment de connexion (242) ;
le premier segment de connexion (241) comporte une partie en forme d'arc connectée à l'extrémité de la plaque de serrage (23) correspondante ; une direction de départ du premier segment de connexion (241) est située dans une première direction, le premier segment de connexion (241) s'étend en s'écartant de la première direction, et une direction de fin du premier segment de connexion (241) est située dans une deuxième direction ; la première direction est une direction d'extension de la plaque de serrage (23), et la deuxième direction est perpendiculaire à la première direction ; et
une extrémité libre du deuxième segment de connexion (242) vient en butée contre la plaque de serrage (23) correspondante.

3. Ensemble enfichable (200) selon la revendication 1, **caractérisé en ce que** la plaque inférieure (22), les plaques de serrage (23) et les parties de contact (24) présentent une structure monobloc.

4. Ensemble enfichable (200) selon la revendication 1, **caractérisé en ce que** le collier de mise à la terre (2) comporte en outre des nervures de renfort (25) ; et les nervures de renfort (25) sont situées sur des surfaces externes des parties de contact (24), des plaques de serrage (23) et des deux extrémités de la plaque inférieure (22).

5. Ensemble enfichable (200) selon la revendication 4, **caractérisé en ce que** les nervures de renfort (25), les parties de contact (24), les plaques de serrage (23) et la plaque inférieure (22) présentent une structure monobloc.

6. Ensemble enfichable (200) selon la revendication 1, **caractérisé en ce qu'**une projection orthogonale de la partie de contact (24) sur la plaque de serrage (23) est située au milieu de la plaque de serrage (23).

7. Ensemble enfichable (200) selon la revendication 1, **caractérisé en ce qu'**une largeur d'une projection orthogonale de la partie de contact (24) sur la plaque inférieure (22) est inférieure à une largeur d'une projection orthogonale de la plaque de serrage (23) sur la plaque inférieure (22).

8. Ensemble enfichable (200) selon la revendication 1, **caractérisé en ce qu'**une projection orthogonale de la partie de contact (24) sur la plaque de serrage (23) est située au milieu de la plaque de serrage (23) ; et
une largeur d'une projection orthogonale de la partie de contact (24) sur la plaque inférieure (22) est inférieure à une largeur d'une projection orthogonale de la plaque de serrage (23) sur la plaque inférieure (22).

9. Ensemble enfichable (200) selon la revendication 1, **caractérisé en ce que** chaque trou d'évitement (1111) est disposé dans une surface inférieure de rainure de limitation (1114) respective ;
le trou d'évitement (1111) s'étend le long d'une direction axiale du corps de cylindre (11) jusqu'à la paroi inférieure (112) et s'étend à travers une partie de la paroi inférieure (112) ;
une surface de serrage (231) de la plaque de serrage (23) est fixée à la surface inférieure de rainure de limitation (1114) ; et
deux surfaces latérales du trou d'évitement (1111) en vis-à-vis le long de la direction circonférentielle du corps de cylindre (11) sont configurées pour limiter le déplacement d'une partie de contact (24) le long de la direction circonférentielle du corps de cylindre (11).

10. Ensemble enfichable (200) selon la revendication 9, **caractérisé en ce que** la rainure de limitation (1110) comporte en outre deux saillies en forme de bande (1113) disposées en vis-à-vis, et faisant saillie à partir de la surface externe de la paroi latérale (111) le long de la direction radiale du corps de cylindre (11) ;
les saillies en forme de bande (1113) s'étendent le long de la direction axiale du corps de cylindre (11), et une direction longitudinale des saillies en forme de bande (1113) est parallèle à la direction axiale du corps de cylindre (11) ; et
des surfaces latérales en vis-à-vis des deux saillies en forme de bande (1113) sont configurées pour limiter le déplacement de la plaque de serrage (23) le long de la direction circonférentielle du corps de cylindre (11).

11. Ensemble enfichable (200) selon la revendication 9, **caractérisé en ce que** la paroi inférieure (112) comporte une rainure d'installation (1121) sur un côté éloigné de la cavité interne du corps de cylindre (11) ; la rainure d'installation (1121) s'étend le long de la direction radiale du corps de cylindre (11), et deux extrémités de la rainure d'installation (1121) communiquent respectivement avec les rainures de limitation (1110) ; et la plaque inférieure (22) est située dans la rainure d'installation (1121).

12. Ensemble enfichable selon la revendication 11, **caractérisé en ce que** la rainure d'installation (1121) comporte une saillie de positionnement (1122) ; la plaque inférieure (22) du collier de mise à la terre (2) comporte un trou traversant (222) pour permettre le passage de la saillie de positionnement (1122) à travers ; et la saillie de positionnement (1121) est configurée pour coopérer avec le trou traversant (222) pour empêcher le collier de mise à la terre (2) de se déplacer le long de la direction circonférentielle du corps de cylindre (11) par rapport à l'organe de recouvrement (1).

13. Prise (100), **caractérisée en ce que** la prise (100) comprend une plaque de recouvrement (110) ; la plaque de recouvrement (110) comporte :
au moins un ensemble enfichable (200) selon l'une quelconque des revendications 1 à 12 ; et
une pièce de connexion à la terre (3), l'au moins un ensemble enfichable (200) étant connecté de manière fixe à la pièce de connexion à la terre (3).

14. Prise (100) selon la revendication 13, **caractérisée en ce que** le collier de mise à la terre (2) comporte un trou de rivetage (221) et la pièce de connexion à la terre (3) comporte un trou d'installation (31) ; et le collier de mise à la terre (2) est connecté de manière fixe à la pièce de connexion à la terre (3) par un rivet (32) passant à travers le trou d'installation (31) et le trou de rivetage (221) dans l'ordre ;
ou,
le collier de mise à la terre (2) comporte le trou de rivetage (221) et la pièce de connexion à la terre (3) comporte le trou d'installation (31) ; et le collier de mise à la terre (2) est connecté de manière fixe à la pièce de connexion à la terre (3) par le rivet (32) passant à travers le trou d'installation (31) et le trou de rivetage (221) dans l'ordre ; la paroi inférieure (112) comporte une rainure d'installation (1121) sur un côté éloigné de la cavité interne du corps de cylindre (11) ; la rainure d'installation (1121) s'étend le long de la direction radiale du corps de cylindre (11), et la rainure d'installation (1121) comporte un trou borgne (1123) configuré pour accueillir une partie saillante du rivet (32) passant à travers le trou de rivetage (221).

15. Prise (100) selon la revendication 13 **caractérisée en ce que** la prise (100) comprend en outre un ensemble porte de protection (130), un cordon d'alimentation (140), un interrupteur (150), un connecteur à bande de cuivre (160) et une coque de base (120), dans laquelle
l'ensemble porte de protection (130) est situé entre la plaque de recouvrement (110) et la coque de base (120) ;
et l'ensemble porte de protection (130) est configuré pour recouvrir des sorties de prise de la prise (100) dans un cas où une fiche d'un dispositif électrique n'est pas branchée dans la prise (100), et pour exposer les sorties de prise de la prise (100) dans un cas où la fiche du dispositif électrique est branchée dans la prise (100) ;
le connecteur à bande de cuivre (160) est situé entre l'ensemble porte de protection (130) et la coque de base (120), installé sur l'ensemble porte de protection (130), et connecté à une borne de sortie de l'interrupteur (150) par l'intermédiaire d'un fil de liaison ;
le cordon d'alimentation (140) est connecté à une borne d'entrée de l'interrupteur (150) ; et
l'interrupteur (150) est configuré pour contrôler si un courant est produit entre le cordon d'alimentation (140) et le connecteur à bande de cuivre (160), et contrôler en outre si la prise (100) est alimentée.
